# EUROPEAN PATENT SPECIFICATION

(11) **EP 1 952 072 B1**
(45) Date of publication and mention of the grant of the patent: **23.08.2017**
(21) Application number: 06812199.5
(22) Date of filing: 24.10.2006
(51) Int. Cl.: F24F 11/02

(54) **APPARATUS AND METHOD FOR CONTROLLING AIR CONDITIONER**
VORRICHTUNG UND VERFAHREN ZUR STEUERUNG EINER KLIMAANLAGE
DISPOSITIF ET PROCEDE PERMETTANT DE COMMANDER UN CLIMATISEUR

(30) Priority: 24.11.2005 KR 20050113163
(43) Date of publication of application: 06.08.2008
(73) Proprietor: LG Electronics Inc., Yongdungpo-gu Seoul 150-010 (KR)
(72) Inventor: LIM, Sun-Kyoung, Seoul 153-766 (KR); KIM, Dai-Hyun, Gyeonggi-do 423-856 (KR); KIM, Hag-Wone, Chungcheongnam-do 330-771 (KR)
(74) Representative: Vossius & Partner Patentanwälte Rechtsanwälte mbB
(86) International application number: PCT/KR2006/004338
(87) International publication number: WO 2007/061186

(56) References cited:
- EP-A1- 1 126 223
- EP-A2- 0 774 631
- GB-A- 2 215 866
- GB-A- 2 215 867
- GB-A- 2 274 930
- JP-A- 09 126 530
- JP-A- 63 169 437
- JP-A- 2005 016 859
- US-A- 4 736 595
- US-A- 4 968 338
- US-A- 5 209 075
- US-A- 5 295 363
- US-A- 6 065 298
- US-A1- 2005 204 760
- US-B1- 6 397 611

## Description

### TECHNICAL FIELD

The present invention relates to an apparatus and method for controlling an air conditioner, and more particularly, to a microcomputer of an apparatus for controlling an air conditioner.

### BACKGROUND ART

Generally, a prior art air conditioner is provided with two microcomputers so as to separately control a valve, a fan, a compressor, a power supply unit, etc.

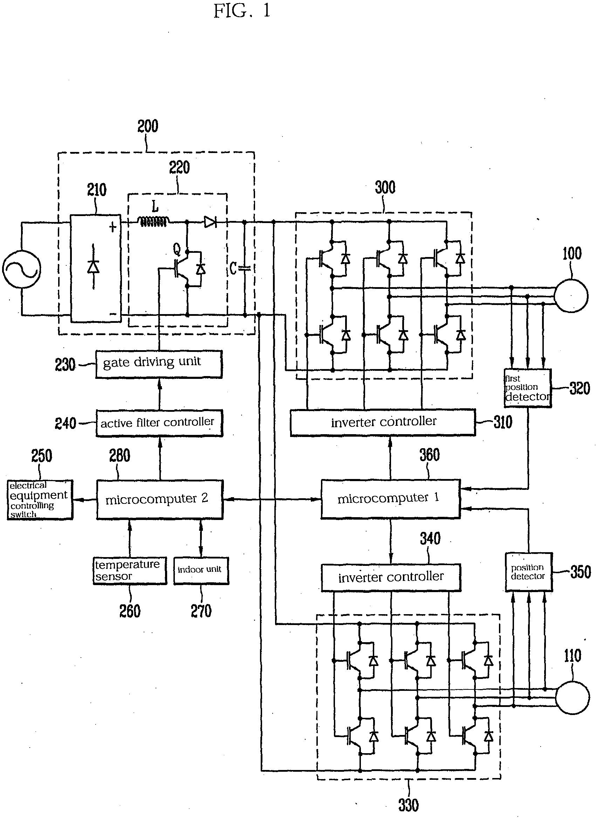

Hereinafter, a prior art apparatus for controlling an air conditioner will be explained with reference to FIG. 1.

FIG. 1 shows an apparatus for controlling an air conditioner in accordance with the prior art.

As shown in FIG. 1, the prior art apparatus for controlling an air conditioner comprises a converter 200 consisting of a rectifying unit 210, an active filter 220, and a smoothening capacitor C, for converting a commercial alternating current (AC) power into a direct current (DC); inverters 300 and 330 for converting the DC converted by the converter 200 into an AC, and supplying the converted AC to a compressor-driving motor 100 and a fan-driving motor 110; inverter controllers 310 and 340 for driving the compressor-driving motor 100 and the fan-driving motor 100 by controlling the inverters 300 and 330; a first microcomputer 360 for controlling position detectors 320 and 350 that detect a position of each pole of the compressor-driving motor 100 and the fan-driving motor 110; and a second microcomputer 280 for controlling an active filter controller 240 that controls the active filter 220, electrical equipment controlling switches 250 (such as relays and valves), a temperature sensor 260, an indoor unit 270, and the first microcomputer 360.

The rectifying unit 210 rectifies an AC voltage inputted from a commercial power. The active filter 220 composed of a reactor L and a switching device Q converts a phase of the inputted AC into a sine waveform of an inputted voltage. The smoothening capacitor C smoothens the output voltage from the active filter 220 into a DC voltage. The smoothened DC voltage is supplied to the inverter 300 for supplying a voltage to the compressor-driving motor 100, and the inverter 330 for supplying a voltage to the fan-driving motor 110.

The active filter controller 240 controls a gate driving unit 23 for driving the switching device Q of the active filter 220, thereby controlling the active filter 220.

The first microcomputer 360 controls the compressor-driving motor 100, and the fan-driving motor 110. The second microcomputer 280 indirectly controls the compressor-driving motor 100 and the fan-driving motor 110 by controlling the first microcomputer 360. Also, the second microcomputer 280 controls the active filter 220 for supplying power to the compressor-driving motor 100 and the fan-driving motor 110, the electrical equipment controlling switches 250, the temperature sensor 260, the indoor unit 270, etc.

The prior art apparatus for controlling an air conditioner has been disclosed in the U.S.A Patent Publication No. 6, 397,611 B1.

However, the prior art apparatus for controlling an air conditioner has the following problems.

First, since each high-speed microcomputer that can process data with a high speed has to be implemented as the first microcomputer 360 and the second microcomputer 280, a fabrication cost for the apparatus is increased.

Second, since a data communication amount between the first microcomputer 360 and the second microcomputer 280 is increased, a reliability of the apparatus for controlling an air conditioner is degraded and a complicated circuit is implemented.

EP 1 126 223 A1 relates to an air conditioner outdoor machine including a signal line connector for receiving ON/OFF signals for a compressor, an outdoor machine drive control unit of an air conditioner including an inverter device for supplying power variable in frequency to the compressor, and a control device for controlling the inverter device to gradually increase the number of revolutions of the compressor when the ON/OFF signal for the compressor received through the signal line connector changes from the OFF condition to the ON condition.

GB 2215866 A relates to an air conditioner system comprising an outdoor unit with at least two variable-capability compressors. A controller generates a parallel operation command for both compressors.

US 6065 298 A relates to an air conditioner including: a current detection unit for detecting a current value of alternating current power supplied from an alternating current power source; an indoor fan motor; an outdoor fan motor;
a compressor connected to an indoor heat exchanger and an outdoor heat exchanger where heat exchanging is carried out by the indoor fan motor and the outdoor fan motor respectively; a refrigerant decompression unit connected to the indoor and outdoor heat exchangers; a drive control unit for controlling drive of the compressor; and a microcomputer for controlling any one of or at least two of the drive control unit, the refrigerant decompression unit, and the indoor and outdoor fan motors.

### DISCLOSURE OF THE INVENTION

Therefore, an object of the present invention is to provide an apparatus and method for controlling an air conditioner capable of reducing a fabrication cost by using one high-speed microcomputer and one port-extension microcomputer, capable of enhancing a reliability thereof by reducing a data communication amount between the microcomputers, and capable of implementing a simple circuit construction.

This object is solved by the features of the independent claims. The dependent claims relate to further aspects of the invention.

In one aspect of the invention there is provided an apparatus for controlling an air conditioner
comprising: a converter for converting an alternating current (AC) voltage into a direct current (DC) voltage, and boosting the DC voltage; a smoothening unit for smoothening the DC voltage from the converter; an inverter for converting the smoothened DC voltage into an AC voltage; and a motor, the apparatus comprising: a supplementary microcomputer for controlling a valve and a relay by receiving a control signal, the valve for controlling a refrigerant flow inside a pipe of the air conditioner, and the relay for controlling a current flow; and a main microcomputer for entirely controlling the air conditioner with including a real-time controlling unit of the air conditioner and the supplementary microcomputer.

In another aspect of the invention there is also provided a method for controlling an air conditioner comprising: a converter for converting an alternating current (AC) voltage into a direct current (DC) voltage, and boosting the DC voltage; a smoothening unit for smoothening the DC voltage from the converter; an inverter for converting the smoothened DC voltage into an AC voltage; and a motor, the method comprising: detecting a current driving state of the air conditioner; performing a supplementary control process for controlling a refrigerant flow inside a pipe of the air conditioner, and a current flow according to the detected driving state by receiving a control signal; and performing a main control process for entirely controlling the air conditioner with including a real-time controlling unit of the air conditioner and the supplementary microcomputer.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is an apparatus for controlling an air conditioner in accordance with the prior art;
FIG. 2 is an apparatus for controlling an air conditioner according to the present invention; and
FIG. 3 is a flowchart showing a method for controlling an air conditioner according to the present invention.

### MODES FOR CARRYING OUT THE PREFERRED EMBODIMENTS

Reference will now be made in detail to the preferred embodiments of the present invention, examples of which are illustrated in the accompanying drawings.

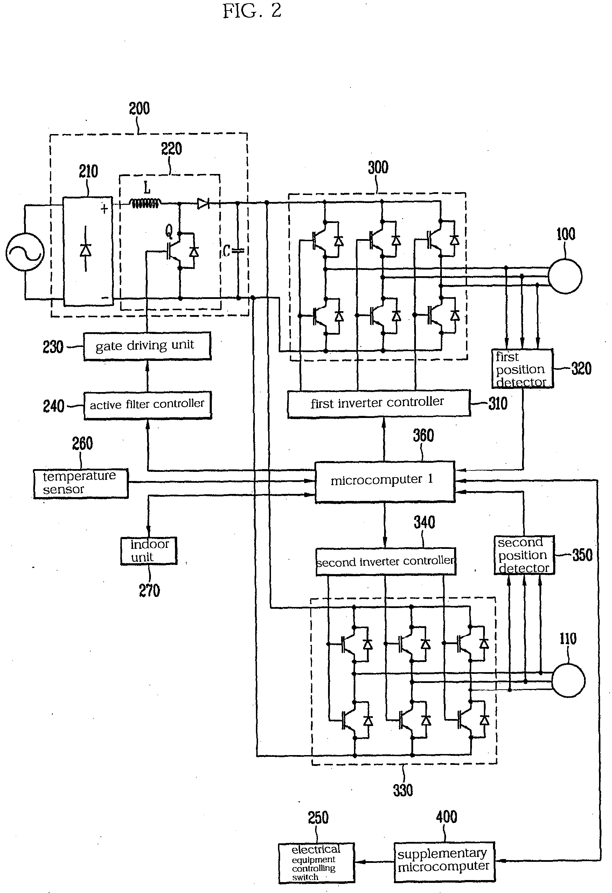

Hereinafter, with reference to FIG. 2, will be explained an apparatus and method for controlling an air conditioner capable of reducing a fabrication cost by using one high-speed microcomputer and one port-extension microcomputer, capable of enhancing a reliability thereof by reducing a data communication amount between the microcomputers, and capable of implementing a simple circuit construction.

The same reference numerals as those of FIG. 1 will be given to the same parts of FIG. 2 as those of FIG. 1.

FIG. 2 is an apparatus for controlling an air conditioner according to the present invention.

As shown in FIG.2, an apparatus for controlling an air conditioner comprising: a converter 200 for converting an alternating current (AC) voltage into a direct current (DC) voltage, and boosting the DC voltage; a smoothening unit C for smoothening the DC voltage from the converter 200; inverters 300 and 330 for converting the smoothened DC voltage into an AC voltage; and motors 100 and 110, the apparatus comprises: a supplementary microcomputer 400 for controlling a valve and a relay by receiving a control signal, the valve for controlling a refrigerant flow inside a pipe of the air conditioner, and the relay for controlling a current flow; and a main microcomputer 360 for entirely controlling the air conditioner with including a real-time controlling unit of the air conditioner and the supplementary microcomputer 400.

The real-time controlling unit comprises: a converter for converting an input AC into an input AC voltage of a sine waveform, converting the AC voltage into a DC voltage, and boosting the converted DC voltage; converter controllers 230 and 240 for controlling the converter 200 according to a control signal; a compressor-driving motor 100 for driving a compressor; a first position detector 320 for detecting a position of a pole of the compressor-driving motor; a fan-driving motor 110 for driving a fan; a second position detector 350 for detecting a position of a pole of the fan-driving motor; inverters 300 and 340 for converting the smoothened DC voltage into an AC voltage; and an inverter controller for controlling the inverter according to a control signal so that the converted AC voltage can be supplied to the compressor-driving motor and the fan-driving motor.

The real-time controlling unit further comprises a temperature sensor 260, and an indoor unit 270 for supplying cool air to an indoor room.

The converter controller comprises a gate driving unit 230 for driving a switch that opens and closes a path of an input power supplied to the smoothening unit C, and an active filter controller 240 for generating a switching signal supplied to the gate driving unit.

The main microcomputer 360 is implemented as a high-speed microcomputer, and the supplementary microcomputer is implemented as a port-extension microcomputer 400.

The rectifying unit 210, the active filter 220, the smoothening capacitor C, and the active filter controller 240 have the same structure and operation as those of the prior art, and thus detailed explanation thereof will be omitted.

The main microcomputer and the supplementary microcomputer will be explained as follows.

The main microcomputer is implemented as a high-speed microcomputer, and entirely controls the air conditioner with including the real-time controlling units and the supplementary microcomputer 400 that require a fast response characteristic, the real-time controlling units including the converter 200, the converter controllers 230 and 240, the first and second inverters 300 and 330, the first and second inverter controllers 310 and 340, the temperature sensor 260, the indoor unit 270, the motors 100 and 110, etc. The main microcomputer controls the air conditioner except for the electrical equipment controlling switches 250 that require no real-time control. The supplementary microcomputer 400 is implemented as a port-extension microcomputer, and controls the electrical equipment controlling switches 250 including each relay and each valve which do not require the real-time control.

In the present invention, an expensive high-speed microcomputer serves as the main microcomputer, thereby performing a real-time control. Also, a cheap port-extension microcomputer serves as the supplementary microcomputer, thereby performing a non real-time control. Accordingly, the expensive high-speed microcomputers need not be used in two.

Accordingly, a data communication amount between the microcomputers 360 and 400 is decreased, thereby enhancing a reliability of the apparatus.

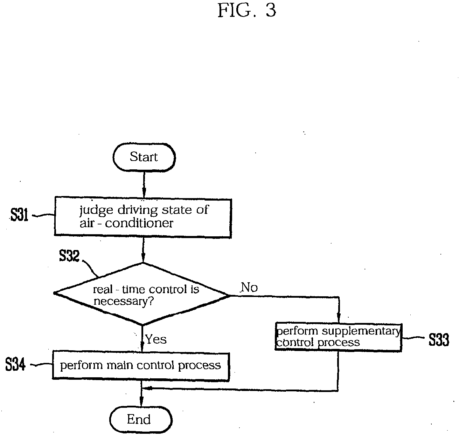

FIG. 3 is a flowchart showing a method for controlling an air conditioner according to the present invention.

As shown in FIG. 3, the method for controlling an air conditioner comprising: a converter for converting an alternating current (AC) voltage into a direct current (DC) voltage, and boosting the DC voltage; a smoothening unit for smoothening the DC voltage from the converter; an inverter for converting the smoothened DC voltage into an AC voltage; and a motor, the method comprises: detecting a current driving state of the air conditioner (S31); performing a supplementary control process for controlling a refrigerant flow inside a pipe of the air conditioner, and a current flow according to the detected driving state by receiving a control signal (S32, S33); and performing a main control process for entirely controlling the air conditioner with including a real-time controlling unit of the air conditioner and the supplementary microcomputer (S32, S34).

The main control process S34 comprises: converting an input AC into an input AC voltage of a sine waveform, converting the AC voltage into a DC voltage, and boosting the converted DC voltage; first-position detecting for detecting a position of a pole of a compressor-driving motor; second-position detecting for detecting a position of a pole of a fan-driving motor; and converting the smoothened DC voltage into an AC voltage according to the detected first and second positions.

The main control process further comprises: detecting each temperature of an indoor room and a compressor valve; and controlling the indoor unit so that cool air can be supplied to the indoor room.

The converting an input AC voltage and boosting comprises: generating a switching signal to drive a converter; and opening and closing a path of an input power supplied to the smoothening unit according to the generated switching signal.

In the main control process (S34), the air conditioner is entirely controlled by the high-speed microcomputer. In the supplementary control process, a refrigerant flow and a current flow inside the air conditioner are controlled by the port-extension microcomputer.

As aforementioned, in the present invention, one expensive high-speed microcomputer and one cheap port-extension microcomputer are used, thereby reducing a fabrication cost of the apparatus for controlling an air conditioner. Furthermore, since the high-speed microcomputer performs a real-time control requiring a fast response characteristic and the port-extension microcomputer controls the relay or the valve requiring no real-time control. Accordingly, a data communication amount between the microcomputers is decreased thus to enhance a reliability of the apparatus.

As the present invention may be embodied in several forms without departing from the scope or essential characteristics thereof, it should also be understood that the above-described embodiments are not limited by any of the details of the foregoing description, unless otherwise specified, but rather should be construed broadly within its scope as defined in the appended claims.

## Claims

1. An apparatus for controlling an air conditioner having a motor (100,110), comprising:
a first microcomputer (360);
a converter (200) configured to convert an alternating current (AC) voltage into a direct current (DC) voltage, and boost the DC voltage;
a converter controller (230,240):
operationally coupled to the first microcomputer and the converter, and configured to control the converter according to a first signal received from the first microcomputer;
an inverter (300,330) configured to convert the boosted DC voltage into an AC voltage to drive the motor;
an inverter controller (310,340):
operationally coupled to the first microcomputer and the inverter, and
configured to control the inverter according to a second signal received from the first microcomputer; and **characterized by**:
a supplementary microcomputer (400) that is:
implemented as a port-extension microcomputer and operationally coupled to the first microcomputer (360),
controlled by the first microcomputer,
configured to control a valve and a relay which do not require a real-time control, the valve for controlling a refrigerant flow inside a pipe of the air conditioner, and the relay for controlling a current flow, according to a third signal received from the first microcomputer.

2. The apparatus of claim 1, further comprising:
a temperature sensor (260):
that is operationally coupled to the first microcomputer (360), and configured to detect a temperature of an indoor room and a compressor valve; and
an indoor unit (270) configured to supply cool air to the indoor room.

3. The apparatus of claim 1, wherein the first microcomputer (360) is implemented as a high-speed microcomputer.

4. A method for controlling an air conditioner having a motor (100,110), comprising:
determining, at a first microcomputer (360), a current driving state of the air conditioner motor, and based on the determined driving state, either:
modifying the driving state by transmitting, from the first microcomputer, at least one of a first signal to a converter controller (230,240) and a second signal to an inverter controller (310,340), or
controlling a refrigerant flow inside a pipe of the air conditioner, and a current flow by transmitting, from the first microcomputer to a supplementary microcomputer (400), a third control signal to control a valve and a relay which do not require a real-time control, the valve for controlling the refrigerant flow, and the relay for controlling the current flow,
**characterized in, that** the supplementary microcomputer (400) is:
implemented as a port-extension microcomputer and operationally coupled to the first microcomputer (360),
controlled by the first microcomputer,
different from the first microcomputer.

5. The method of claim 4, further comprising:
receiving, at the first microcomputer (360), a signal from a temperature sensor (260),
wherein the signal represents a temperature of an indoor room and a compressor valve,
wherein the compressor valve is operationally coupled to an indoor unit (270) configured to supply cool air to the indoor room.

## Patentansprüche

1. Vorrichtung zum Steuern einer Klimaanlage mit einem Motor (100, 110), die aufweist:
einen ersten Mikrocomputer (360);
einen Wandler (200), der konfiguriert ist, um eine Wechselspannung (AC) in eine Gleichspannung (DC) umzuwandeln, und die DC-Spannung zu verstärken;
eine Wandlersteuerung (230, 240), die betriebsfähig mit dem ersten Mikrocomputer und dem Wandler gekoppelt ist und konfiguriert ist, um den Wandler gemäß einem ersten Signal zu steuern, das von dem ersten Mikrocomputer empfangen wird;
einen Inverter (300, 330), der konfiguriert ist, um die verstärkte DC-Spannung in eine AC-Spannung umzuwandeln, um den Motor anzutreiben;
eine Invertersteuerung (310, 340):
die betriebsfähig mit dem ersten Mikrocomputer und dem Inverter gekoppelt ist, und
die konfiguriert ist, um den Inverter gemäß einem zweiten Signal, das von dem ersten Mikrocomputer empfangen wird, zu steuern; und **gekennzeichnet durch**:
einen zusätzlichen Mikrocomputer (400), der:
als ein Port-Erweiterungsmikrocomputer implementiert ist und betriebsfähig mit dem ersten Mikrocomputer (360) gekoppelt ist,
von dem ersten Mikrocomputer gesteuert wird,
konfiguriert ist, um ein Ventil und ein Relais zu steuern, die keine Echtzeitsteuerung benötigen, wobei das Ventil zur Steuerung einer Kältemittelströmung im Inneren einer Rohrleitung der Klimaanlage dient und das Relais zur Steuerung eines Stromflusses gemäß einem dritten Signal, das von dem ersten Mikrocomputer empfangen wird, dient.

2. Vorrichtung nach Anspruch 1, die ferner aufweist:
einen Temperatursensor (260), der betriebsfähig mit dem ersten Mikrocomputer (360) gekoppelt ist und konfiguriert ist, um eine Temperatur eines Innenraums und eines Kompressorventils zu erfassen; und
eine Inneneinheit (270), die konfiguriert ist, um Kühlluft an den Innenraum zu liefern.

3. Vorrichtung nach Anspruch 1, wobei der erste Mikrocomputer (360) als ein Hochgeschwindigkeitsmikrocomputer implementiert ist.

4. Verfahren zum Steuern einer Klimaanlage mit einem Motor (100, 110), das aufweist:
Bestimmen eines aktuellen Antriebszustands des Klimaanlagenmotors an einem ersten Mikrocomputer (360) und basierend auf dem bestimmten Antriebszustand, entweder:
Modifizieren des Antriebszustands durch Übertragen eines ersten Signals von dem ersten Mikrocomputer an eine Wandlersteuerung (230, 240) und/oder eines zweiten Signals an eine Invertersteuerung (310, 340) oder
Steuern einer Kältemittelströmung im Inneren einer Rohrleitung der Klimaanlage und eines Stromflusses durch Senden eines dritten Steuersignals von dem ersten Mikrocomputer an einen zusätzlichen Mikrocomputer (400), um ein Ventil und ein Relais zu steuern, die keine Echtzeitsteuerung benötigen, wobei das Ventil zur Steuerung der Kältemittelströmung dient und das Relais zur Steuerung des Stromflusses dient,
**dadurch gekennzeichnet, dass** der zusätzliche Mikrocomputer (400):
als ein Port-Erweiterungsmikrocomputer implementiert ist und betriebsfähig mit dem ersten Mikrocomputer (360) gekoppelt ist,
von dem ersten Mikrocomputer gesteuert wird,
verschieden von dem ersten Mikrocomputer ist.

5. Verfahren nach Anspruch 4, das ferner aufweist:
Empfangen eines Signals von einem Temperatursensor (260) an dem ersten Mikrocomputer (360),
wobei das Signal eine Temperatur eines Innenraums und eines Kompressorventils darstellt,
wobei das Kompressorventil betriebsfähig mit einer Inneneinheit (270) gekoppelt ist, die konfiguriert ist, um Kühlluft an den Innenraum zu liefern.

## Revendications

1. Appareil pour commander un conditionneur d'air présentant un moteur (100, 110) comprenant :
un premier microordinateur (360) ;
un convertisseur (200) configuré pour convertir une tension de courant alternatif (CA) en une tension de courant continu (CC) et augmenter la tension CC ;
un contrôleur de convertisseur (230, 240) :
couplé en fonctionnement au premier microordinateur et au convertisseur, et configuré pour commander le convertisseur selon un premier signal reçu par le premier microordinateur ;
un onduleur (300, 330) configuré pour convertir la tension CC augmentée en une tension CA pour entraîner le moteur ;
un contrôleur d'onduleur (310, 340) :
couplé en fonctionnement au premier microordinateur et à l'onduleur, et
configuré pour commander l'onduleur selon un deuxième signal reçu par le premier microordinateur ; et **caractérisé par** :
un microordinateur supplémentaire (400) qui est :
implémenté comme un microordinateur à extension de port et couplé en fonctionnement au premier microordinateur (360),
commandé par le premier microordinateur,
configuré pour commander une valve et un relais qui ne requièrent pas de commande en temps réel, la valve pour commander un flux de réfrigérant à l'intérieur un tuyau du conditionneur d'air, et le relais pour commander un flux de courant, selon un troisième signal reçu par le premier microordinateur.

2. Appareil selon la revendication 1, comprenant en outre :
un capteur de température (260) :
qui est couplé en fonctionnement au premier microordinateur (360), et configuré pour détecter une température d'un espace intérieur et d'une valve de compresseur ; et
une unité intérieure (270) configurée pour fournir de l'air froid à l'espace intérieur.

3. Appareil selon la revendication 1, dans lequel le premier microordinateur (360) est implémenté comme un microordinateur à haute vitesse.

4. Procédé de commande d'un conditionneur d'air présentant un moteur (100, 110), comprenant :
la détermination, sur un premier microordinateur (360), d'un état d'entraînement de courant du moteur de conditionneur d'air, et sur la base de l'état d'entraînement déterminé, soit :
la modification de l'état d'entraînement par transmission, depuis le premier microordinateur, d'au moins un d'un premier signal à un contrôleur de convertisseur (230, 240) et d'un deuxième signal à un contrôleur d'onduleur (310, 340), soit la commande d'un flux de réfrigérant dans un tuyau du conditionneur d'air, et d'un flux de courant par transmission, depuis le premier microordinateur à un microordinateur supplémentaire (400), d'un troisième signal de commande pour commander une valve et un relais qui ne requièrent pas de commande en temps réel, la valve pour commander le flux de réfrigérant, et le relais pour commander le flux de courant,
**caractérisé en ce que** le microordinateur supplémentaire (400) est :
implémenté comme un microordinateur à extension de port et couplé en fonctionnement au premier microordinateur (360),
commandé par le premier microordinateur,
différent du premier microordinateur.

5. Procédé selon la revendication 4, comprenant en outre :
la réception, sur le premier microordinateur (360), d'un signal par un capteur de température (260),
dans lequel le signal représente une température d'un espace intérieur et d'une valve de compresseur,
dans lequel la valve de compresseur est couplée en fonctionnement à une unité intérieure (270) configurée pour fournir de l'air froid à l'espace intérieur.
